# EUROPÄISCHE PATENTSCHRIFT

(11) **EP 2 165 398 B1**
(45) Veröffentlichungstag und Bekanntmachung des Hinweises auf die Patenterteilung: **12.01.2011**
(21) Anmeldenummer: 08761111.7
(22) Anmeldetag: 17.06.2008
(51) Int. Cl.: H02B 1/36

(54) **KOAXIALES ANTRIEBSWELLENSYSTEM, FRONTBAUGRUPPE, GERÄTEEINSCHÜBE SOWIE SCHALTSCHRANK**
COAXIAL DRIVE SHAFT SYSTEM, FRONT ASSEMBLY, WITHDRAWABLE UNITS AND SWITCHGEAR CABINET
SYSTÈME D'ARBRE D'ENTRAÎNEMENT COAXIAL, SOUS-GROUPE FRONTAL, TIROIRS ÉLECTRONIQUES ET ARMOIRE DE COMMANDE

(30) Priorität: 09.07.2007 DE 102007032548
(43) Veröffentlichungstag der Anmeldung: 24.03.2010
(73) Patentinhaber: Siemens Aktiengesellschaft, 80333 München (DE)
(72) Erfinder: FRÖHLICH, Tom, 01257 Dresden (DE); HIRSCHFELD, Stefan, 04207 Leipzig (DE); SCHMIDT, Mario, 04178 Leipzig (DE)
(86) Internationale Anmeldenummer: PCT/EP2008/057621
(87) Internationale Veröffentlichungsnummer: WO 2009/007205

(56) Entgegenhaltungen:
- DE-A1- 4 313 647
- DE-A1- 10 216 594
- DE-C1- 4 313 661

## Beschreibung

Die Erfindung betrifft ein koaxiales Antriebswellensystem für einen Geräteeinschub zum Einschieben in ein Einschubfach eines Schaltschrankes. Das Antriebswellensystem weist eine äuβere Antriebswelle zum Verfahren eines Steuerkontaktsystems und eine innere Antriebswelle zum Verfahren eines Hauptkontaktsystems des Geräteeinschubs und eine Zugangsöffnung zum Einstecken eines ersten oder zweiten Betätigungswerkzeuges zum Antreiben der dahinterliegenden Antriebswellen in ihre jeweiligen ersten oder zweiten Drehendstellungen auf.

Weiterhin betrifft die Erfindung eine Frontbaugruppe für einen Geräteeinschub zum Einschieben in ein Einschubfach eines Schaltschrankes.

Darüber hinaus betrifft die Erfindung Geräteeinschübe, insbesondere zum Einschieben in ein Einschubfach eines Schaltschrankes.

Schließlich betrifft die Erfindung einen Schaltschrank mit einer Vielzahl von Einschubfächern, in welchen derartige Geräteeinschübe entfernbar aufgenommen sind.

Die betrachteten Geräteeinschübe können sogenannte Normaleinschübe sein, deren Breite sich über die gesamte Gerätefachbreite eines Schaltschrankes erstreckt. Die Geräteeinschübe können alternativ oder zusätzlich sogenannte Kleineinschübe sein, welche zum Einschub in ein dafür vorgesehenes Einschubfach vorzugsweise die Hälfte oder ein Viertel der zur Verfügung stehenden Gerätefachbreite benötigen.

Aus dem deutschen Gebrauchsmuster DE 296 16 546 U1 ist ein Geräteeinschub für eine Schaltanlage mit durch konzentrische Schaltwellen betätigbaren Trennkontaktanordnungen für Haupt- und Hilfsstromkreise sowie mit einer an dem Geräteeinschub angeordneten Anzeigevorrichtung für den Betriebszustand der Trennkontaktanordnungen bekannt.

Geräteeinschübe sowie Schaltschränke sind allgemein bekannt. Sie werden insbesondere bei industriellen Anlagen in vielfältiger Weise eingesetzt. Durch die Einschubtechnik können elektrische und elektronische Baugruppen einfach zusammengestellt werden. Ein Auswechseln solcher Geräteeinschübe ist auf einfache Weise möglich.

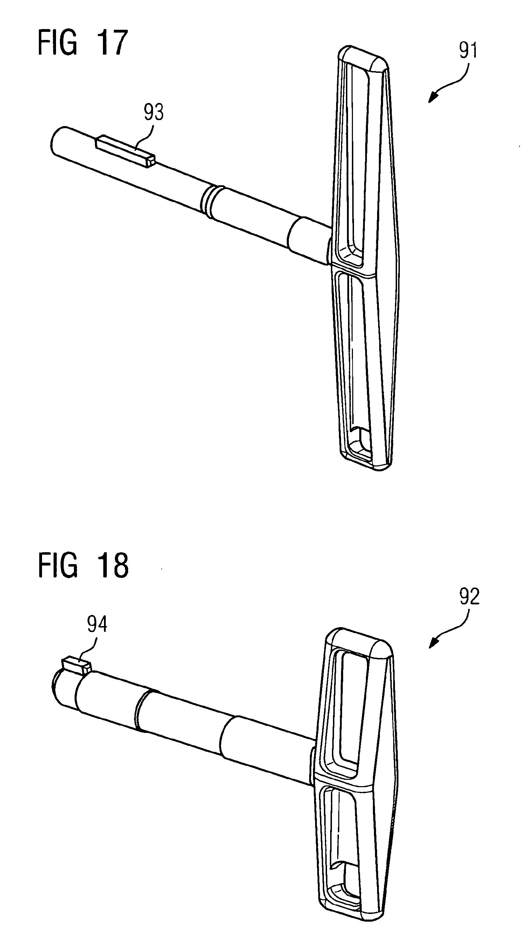

Die betrachteten Geräteeinschübe weisen jeweils ein koaxiales Antriebswellensystem zum Einstellen zweier oder mehrerer Schaltstellungen des jeweiligen Geräteeinschubs auf. Vorzugsweise ist das koaxiale Antriebswellensystem derart ausgebildet, dass mittels eines ersten Betätigungswerkzeuges in Form eines Schlüssels eine innere und eine äußere Antriebswelle gemeinsam betätigt werden können (siehe FIG 17). Dadurch ist ein Verfahren eines mit der inneren Antriebswelle verbundenen Hauptkontaktsystems zum Kontaktieren mit schaltschrankseitigen feststehenden Hauptstromkontakten möglich. Zugleich wird ein mit der äußeren Antriebswelle verbundenes Steuerkontaktsystem zum Kontaktieren mit schaltschrankseitigen feststehenden Steuerstromkontakten verfahren. Es werden somit beide Antriebswellen von einer Trennstellung in eine Betriebsstellung des Geräteeinschubs gedreht, wobei die Trennstellung die eine Drehendstellung und die Betriebsstellung die andere Drehendstellung des Antriebswellensystems ist.

Mittels eines zweiten Betätigungswerkzeuges ist nur ein Verfahren der äußeren Antriebswelle möglich (siehe FIG 18). Dadurch wird der Geräteeinschub von einer Trennstellung in eine Teststellung geschaltet, wobei hier die Trennstellung die eine Drehendstellung und die Teststellung die andere Drehendstellung des Antriebswellensystems ist. Typischerweise sind die Drehendstellungen um 180° zueinander versetzt.

Heutige Geräteeinschübe weisen den Nachteil auf, dass sich die mit den Antriebswellen verbundenen Kontaktsysteme aufgrund von starken Vibrationen oder Erschütterungen, wie z.B. bei einem Einsatz der Geräteeinschübe in Baggern, auf Schiffen und dergleichen, oder aufgrund von elektromagnetische Vibrationen oder Schwingungen mit der Zeit zu "wandern" beginnen können. Dies hat zur Folge, dass sich die Antriebswellen aus ihrer jeweiligen Drehendstellung heraus in eine undefinierte Zwischenstellung verdrehen können und dass somit keine sichere Kontaktierung mehr gewährleistet wäre. Ein Ausfall des Geräteeinschubs könnte bei diesen Anwendungen nur mit hohem Zusatzaufwand vermieden werden.

Es ist somit eine Aufgabe der Erfindung, ein koaxiales Antriebswellensystem anzugeben, welches die obengenannten Nachteile nicht aufweist.

Es ist eine weitere Aufgabe der Erfindung, eine geeignete Frontbaugruppe mit einem derartigen koaxialen Antriebswellensystem für einen Geräteeinschub anzugeben.

Eine weitere Aufgabe ist es, Geräteeinschübe mit einem derartigen koaxialen Antriebswellensystem bzw. mit einer derartigen Frontbaugruppe anzugeben.

Schließlich ist es eine Aufgabe der Erfindung, einen Schaltschrank mit einer Vielzahl von Einschubfächern anzugeben, in welchen derartige Geräteeinschübe entfernbar aufgenommen sind.

Die Aufgabe der Erfindung wird mit einem koaxialen Antriebswellensystem mit den Merkmalen des Anspruchs 1 gelöst. Vorteilhafte Ausgestaltungen des koaxialen Antriebswellensystems sind in den abhängigen Ansprüchen 2 bis 10 angegeben. Im Anspruch 11 ist eine Frontbaugruppe mit einem derartigen koaxialen Antriebswellensystem genannt. In den Ansprüchen 12 und 13 sind Geräteeinschübe mit einem derartigen koaxialen Antriebswellensystem bzw. einer derartigen Frontbaugruppe genannt. Im Anspruch 14 ist ein Schaltschrank mit einer Vielzahl von Einschubfächern angegeben, in welche derartige Geräteeinschübe entfernbar aufgenommen sind.

Erfindungsgemäß ist die innere Antriebswelle gegenüber der äußeren Antriebswelle gegen die Kraft einer Druckfeder axial verschiebbar angeordnet. Mit "axial" ist eine Richtung parallel zur Drehachse des koaxialen Antriebswellensystems bezeichnet. Die innere Antriebswelle ist mittels des ersten Betätigungswerkzeuges (siehe FIG 17) nur in einer Gedrücktstellung von der einen Drehendstellung in die jeweils andere Drehendstellung drehbar. Die Druckfeder ist vorzugsweise eine zylindrische, auf einem der Zugangsöffnung gegenüberliegenden Wellenende aufgeschobene Druckfeder. Sie kann alternativ eine Biegefeder, eine Gasdruckfeder oder dergleichen sein.

Damit ist der große Vorteil verbunden, dass eine sichere Fixierung der Antriebswellen in ihrer jeweiligen Drehendstellung gegeben ist. Eine Verschiebung der Kontaktsysteme aufgrund von Schwingungen und Vibrationen wird zuverlässig verhindert. Zum möglichen Verdrehen muss die innere Antriebswelle aktiv von einer Ruhestellung in eine Gedrücktstellung mittels eines der Betätigungswerkzeuge bewegt werden.

Ein weiterer großer Vorteil ist, dass ein Bediener eines Geräteeinschubs eine taktile Rückmeldung in Form eines spürbaren Einrastens beim Erreichen der jeweiligen Drehendstellung erhält.

Nach einer Ausführungsform ist die innere Antriebswelle über eine Formschlussverbindung in ihrer jeweiligen Drehendstellung verrastbar. Dadurch wird eine besonders zuverlässige Fixierung der inneren Antriebswelle in ihrer jeweiligen Drehendstellung erreicht.

Alternativ oder zusätzlich ist die innere Antriebswelle einer weiteren Ausführungsform zufolge über eine durch die Druckfeder bewirkte Kraftschlussverbindung in ihrer jeweiligen Drehendstellung drehfest fixierbar. Dadurch wird Zuverlässigkeit der Fixierung nochmals erhöht.

Vorzugsweise weisen die innere und äußere Antriebswelle jeweils eine Mitnehmeraussparung im Bereich der Zugangsöffnung auf, welche mit einem jeweiligen Mitnehmer des ersten oder zweiten Betätigungswerkzeuges korrespondiert. Die innere und äußere Antriebswelle sind mittels des ersten Betätigungswerkzeuges mit einem in beide Mitnehmeraussparungen der Antriebswellen eingreifenden ersten Mitnehmer gemeinsam betätigbar.

Die äußere Antriebswelle ist mittels des zweiten Betätigungswerkzeuges mit einem nur in die Mitnehmeraussparung der äußeren Antriebswelle eingreifenden zweiten Mitnehmer betätigbar.

Nach einer Ausführungsform weisen die jeweiligen Drehendstellungen der inneren und äußeren Antriebswelle einen vorgegebenen Drehwinkel zueinander auf. Insbesondere beträgt der Drehwinkel 180°. Alternativ kann dieser 90° betragen. Dadurch kann ein Bediener optisch das Erreichen der jeweiligen Drehendstellung feststellen.

Nach einer weiteren Ausführungsform weist die äußere Antriebswelle eine erste Außenverzahnung zum Verfahren des Steuerkontaktsystems auf. Die innere Antriebswelle weist eine zur ersten Außenverzahnung axial benachbarte zweite Außenverzahnung zum Verfahren des Hauptkontaktsystems auf. Dadurch ist ein schlupffreies Verfahren der beiden Kontaktsysteme vorteilhaft möglich. Typischerweise handelt es sich bei der Außenverzahnung um ein auf der jeweiligen Antriebswelle aufgebrachtes Zahnrad. Alternativ kann die jeweilige Antriebswelle aus einem Stück gefertigt sein.

Nach einer besonderen Ausführungsform weist die innere Antriebswelle zwei Ausnehmungen, insbesondere zwei sich gegenüberliegende und vorzugsweise segmentförmige Ausnehmungen, an einer gleichen axialen Position zwischen der ersten und zweiten Außenverzahnung auf. Die beiden Ausnehmungen sind derart geometrisch auf ein Gegenstück im Geräteeinschub abgestimmt, dass die innere Antriebswelle nur in den Drehendstellungen durch die Rückstellkraft der Druckfeder in das Gegenstück einrastbar ist. Dadurch ist auf mechanisch besonders einfache Weise eine zuverlässige Fixierung der inneren Antriebswelle in ihrer jeweiligen Drehendstellung möglich.

Ist die zweite Außenverzahnung der inneren Antriebswelle mit einer antriebsseitigen Verzahnung zumindest einer Schubstange zum Verfahren des Hauptkontaktsystems im Eingriff und ist ein seitlicher, entlang einer Schubrichtung verlaufender Steg der Schubstange das besagte Gegenstück, so können die Ausnehmungen der inneren Antriebswelle in oder an dem Gegenstück einrasten. Der besondere Vorteil dabei ist, dass kein separates Gegenstück im Geräteeinschub angebracht werden muss. Es wird in vorteilhafter Weise die sowieso benötigte Schubstange verwendet.

Nach einer weiteren Ausführungsform ist die zweite Außenverzahnung der inneren Antriebswelle mit einer antriebsseitigen Verzahnung einer Schubstange zum Verfahren des Hauptkontaktsystems im Eingriff. Die antriebsseitige Verzahnung ist derart ausgebildet, dass eine Drehbewegung der inneren Antriebswelle zwischen den jeweiligen Endstellungen nur in der Gedrücktstellung möglich ist. Dies kann z.B. dadurch erreicht werden, dass die Verzahnung der Zahnstange zwischen den beiden Drehendstellungen "aufgefüllt" ist, so dass für den Fall einer gewünschten Drehbewegung bei nicht gedrückter innerer Antriebswelle die Verzahnung blockiert ist. Im einfachsten Fall wird in der Schubstange keine Verzahnung entlang des in Schubrichtung verlaufenden Bereiches eingebracht. Alternativ kann eine bestehende Verzahnung aufgefüllt werden.

Nach einer weiteren Ausführungsform weist die innere Antriebswelle zumindest eine Rastnase an einer radialen Außenseite und an einer gleichen axialen Position zwischen der ersten und zweiten Außenverzahnung auf. Mit "radial" ist eine Richtung zu oder weg von der Drehachse des koaxialen Antriebswellensystems bezeichnet. Vorzugsweise ist nur eine Rastnase am Außenumfang der inneren Antriebswelle vorhanden. Die zumindest eine Rastnase ist derart geometrisch auf die Aussparungen in einer Lagerplatte im Geräteeinschub abgestimmt, dass die innere Antriebswelle nur in den Drehendstellungen durch die Rückstellkraft der Druckfeder in die Aussparungen einrastbar ist. Vorzugsweise liegen sich die Aussparungen in Bezug auf die Drehachse des koaxialen Antriebswellensystems gegenüber. Dies ist vorteilhaft für Drehwinkel von 180° zwischen den jeweiligen Drehendstellungen. Um die Rastung zwischen der zumindest einen Rastnase und den korrespondierenden Aussparungen aufzuheben, muss die innere Antriebswelle mittels des ersten Betätigungswerkzeuges axial gegen die Druckfeder bewegt werden.

Nach einer weiteren besonders vorteilhaften Ausführungsform ist zumindest eine Mitnehmernase an einer radialen Außenseite der inneren Antriebswelle angeordnet. Die äußere Antriebswelle weist etwa im gleichen axialen Bereich einen entlang der radialen Außenseite der äußeren Antriebswelle teilweise tangential verlaufenden Ausschnitt mit einer axialen Rastvertiefung an den Ausschnittenden auf. Mit "tangential" ist eine Richtung um die Drehachse des Antriebswellensystems herum bezeichnet. Die Mitnehmernase fährt bei einer Drehbetätigung der äußeren Antriebswelle derart in den Ausschnitt der äußeren Antriebswelle ein, dass die äußere Antriebswelle mit der inneren Antriebswelle in einer der beiden Enddrehstellungen, das heißt in der Trenn- oder Teststellung, verrastet. In diesen Drehendstellungen bewirkt die Druckfeder, dass die Mitnehmernase an der inneren Antriebswelle wieder in den Ausschnitt der äußeren Antriebswelle gedrückt wird und somit eine sichere Fixierung der äußeren Antriebswelle gegeben ist.

Die Aufgabe der Erfindung wird weiterhin mit einer Frontbaugruppe für einen Geräteeinschub zum Einschieben in ein Einschubfach eines Schaltschrankes gelöst. Die Frontbaugruppe weist in kennzeichnender Weise zumindest teilweise ein erfindungsgemäßes koaxiales Antriebswellensystem zum Einstellen zweier oder mehrerer Schaltstellungen des Geräteeinschubs auf. Eine derartige Baugruppe weist vorteilhaft eine geringe Anzahl von Bauteilen auf. Sie ist mit erheblich geringerem Aufwand montierbar. Im Vergleich zu einer "offenen" Anordnung ist diese zudem gegenüber Verschmutzung, Feuchtigkeit oder mechanischen Beschädigungen geschützt.

Vorzugsweise weist die Frontbaugruppe einen Handschieber zum Verschließen oder zum Freigeben der Zugangsöffnung des Antriebwellensystems auf. Der Handschieber ist derart mit einem Drehbetätigungsmechanismus eines Hauptschalters des Geräteeinschubs verbindbar, dass ein Einschalten des Hauptschalters bei geöffnetem Handschieber und ein Öffnen des Handschiebers bei eingeschaltetem Hauptschalter nicht möglich ist. Durch den gegenseitigen Verriegelungsmechanismus wird die Sicherheit des Geräteeinschubs erhöht.

Alternativ kann die Frontbaugruppe einen Handschieber zum Verschließen oder zum Freigeben der Zugangsöffnung des Antriebwellensystems sowie eine Handhabe zur Betätigung eines Hauptschalters aufweisen. Der Handschieber ist derart mit einem Drehbetätigungsmechanismus der Handhabe des Hauptschalters des Geräteeinschubs verbunden, dass ein Einschalten des Hauptschalters bei geöffnetem Handschieber und ein Öffnen des Handschiebers bei eingeschaltetem Hauptschalter nicht möglich ist. Auch in diesem Fall wird die Sicherheit des Geräteeinschubs durch den gegenseitigen Verriegelungsmechanismus erhöht.

Die Aufgabe wird weiterhin durch einen Geräteeinschub, insbesondere zum Einschieben in ein Einschubfach eines Schaltschrankes, mit einer Frontplatte mit einer Aussparung zur Aufnahme einer erfindungsgemäßen Frontbaugruppe zum Einstellen zweier oder mehrerer Schaltstellungen des Geräteeinschubs und gegebenenfalls zum Betätigen eines Hauptschalters des Geräteeinschubs gelöst. Ein derartiger Geräteeinschub weist eine höhere Zuverlässigkeit in rauen Einsatzfeldern mit starken Schwingungen und Vibrationen auf, wie z.B. auf einem Schiff oder in einem Bagger.

Schließlich wird die Aufgabe durch einen Schaltschrank mit einer Vielzahl von Einschubfächern gelöst, in welche erfindungsgemäße Geräteeinschübe entfernbar aufgenommen sind. Ein solcher Schaltschrank ist vorteilhaft in rauen Einsatzfeldern mit starken Schwingungen und Vibrationen einsetzbar.

Die Erfindung sowie vorteilhafte Ausführungen der Erfindung werden im Weiteren anhand der nachfolgenden Figuren näher beschrieben. Es zeigen
- FIG 1: in einem Schaltschrank eingeschobene beispielhafte Geräteeinschübe in Form von Kleineinschüben,
- FIG 2: in einem Schaltschrank eingeschobene beispielhafte Geräteeinschübe in Form von Normaleinschüben,
- FIG 3: eine perspektivische Ansicht eines Kleineinschubs,
- FIG 4: eine perspektivische Ansicht eines Normaleinschubs,
- FIG 5: eine beispielhafte Frontbaugruppe mit einem erfin- dungsgemäßen Antriebswellensystem vorzugsweise für einen Kleineinschub in perspektivischer Ansicht,
- FIG 6: eine beispielhafte Frontbaugruppe mit einem erfin- dungsgemäßen Antriebswellensystem vorzugsweise für einen Normaleinschub in perspektivischer Ansicht,
- FIG 7: eine Explosionsdarstellung der Frontbaugruppe gemäß FIG 6 mit dem koaxialen Antriebswellensystem mit dargestellten anzutreibenden Schubstangen,
- FIG 8: ein beispielhafter im Schnitt dargestellter Klein- einschub mit einem erfindungsgemäßen koaxialen An- triebswellensystem mit eingefahrenen Schubstangen,
- FIG 9: eine Schnittdarstellung durch das Antriebswellen- system der Frontbaugruppe gemäß FIG 8 mit ausgefah- renen Schubstangen im Detail,
- FIG 10: eine Schnittdarstellung durch das Antriebswellen- system der Frontbaugruppe gemäß FIG 8 mit eingefah- renen Schubstangen sowie eine innere Antriebswelle in einer Gedrücktstellung im Detail,
- FIG 11: eine Schnittdarstellung durch das Antriebswellen- system entlang der in FIG 10 eingetragenen Schnitt- linie XI-XI mit erfindungsgemäßen Ausnehmungen an der inneren Antriebswelle im Detail,
- FIG 12: eine Explosionsdarstellung einer beispielhaften Frontbaugruppe vorzugsweise für einen Normalein- schub mit einer Rastnase und Aussparungen gemäß der Erfindung,
- FIG 13: eine Ansicht auf ein Unterteil der Frontbaugruppe gemäß FIG 12 mit dem Antriebswellensystem in einer Ruhestellung der inneren Antriebswelle,
- FIG 14: eine Ansicht auf das Unterteil gemäß FIG 13 in ei- ner Gedrücktstellung der inneren Antriebswelle,
- FIG 15: ein koaxiales Antriebswellensystem vorzugsweise für einen Kleineinschub mit einer inneren Antriebswelle und einer mit dieser verrasteten äußeren Antriebs- welle gemäß der Erfindung,
- FIG 16: das koaxiale Antriebswellensystem gemäß FIG 15 im entrasteten Zustand der beiden Antriebswellen,
- FIG 17: beispielhaft ein erstes Betätigungswerkzeug und
- FGI 18: beispielhaft ein zweites Betätigungswerkzeug

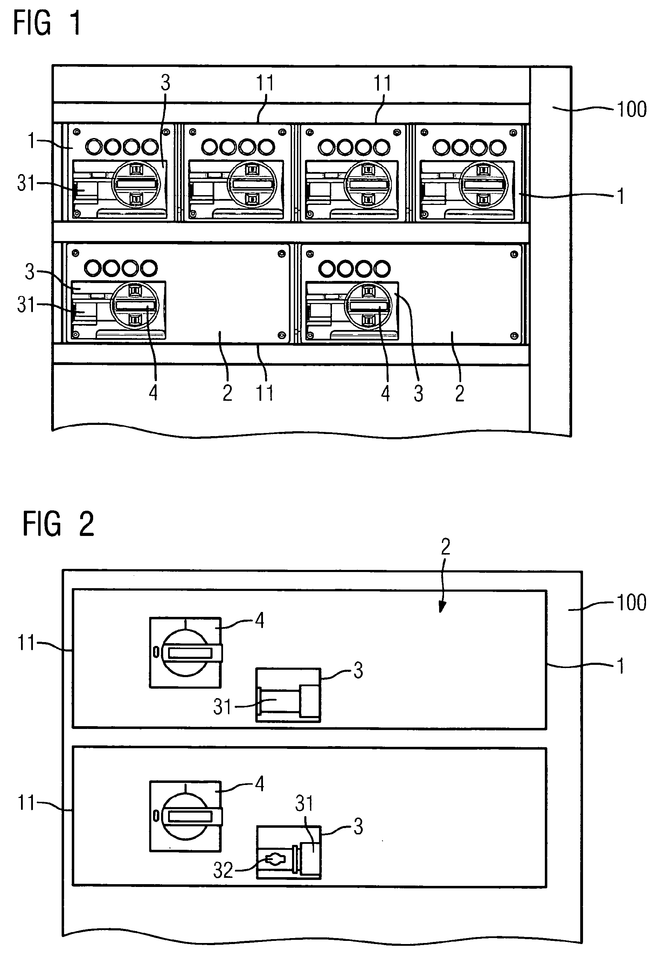

FIG 1 zeigt in einem Schaltschrank 100 eingeschobene beispielhafte Geräteeinschübe 1 in Form von Kleineinschüben. Der gezeigte Schaltschrank 100 kann mehrere Einschubzeilen, wie z.B. fünf, und mehrere Einschubfächer je Einschubzeile aufweisen. Im Beispiel der FIG 1 sind in der ersten Einschubzeile beispielhaft vier modulare Geräteeinschübe 1 entfernbar eingeschoben. In der darunter liegenden Einschubzeile sind zwei Geräteeinschübe 1 mit einer im Vergleich zu den oberen Geräteeinschüben 1 doppelten Baubreite eingeschoben. Mit dem Bezugszeichen 2 ist eine Frontseite der Geräteeinschübe 1 bezeichnet, mit dem Bezugszeichen 11 eine jeweilige Frontplatte. In ihr ist jeweils eine Frontbaugruppe 3 zum Einstellen zweier oder mehrerer Schaltstellungen des jeweiligen Geräteeinschubs 1 eingebracht. Mit dem Bezugszeichen 31 ist ein Handschieber zum Öffnen oder Verschließen einer in dieser Figur verdeckten Zugangsöffnung bezeichnet. Die Zugangsöffnung ist zum Einstecken eines Betätigungswerkzeugs zum Einstellen der verschiedenen Schaltstellungen vorgesehen. Mit dem Bezugszeichen 4 ist eine Handhabe zur Betätigung eines im Inneren des jeweiligen Geräteeinschubs 1 angeordneten Hauptschalters bezeichnet.

FIG 2 zeigt in einem Schaltschrank 100 eingeschobene beispielhafte Geräteeinschübe 1 in Form von Normaleinschüben. Sie weisen eine Baubreite auf, die sich über die gesamte Zeilenbreite des gezeigten Schaltschranks 100 erstreckt. Insbesondere ist die Baubreite doppelt bzw. viermal so groß wie die Baubreite der in FIG 1 gezeigten Kleineinschübe 1. Mit dem Bezugszeichen 3 ist eine Frontbaugruppe bezeichnet. Die untere Schrankzeile zeigt die Frontbaugruppe 3 mit geöffnetem Handschieber 31, so dass nun die Zugangsöffnung 32 zum Einstecken eines Betätigungswerkzeuges zu sehen ist. Die Handhabe 4 ist im Gegensatz zum Beispiel der FIG 1 nicht in der Frontbaugruppe 3 integriert, sondern separat im Bereich der Frontseite 2 angeordnet.

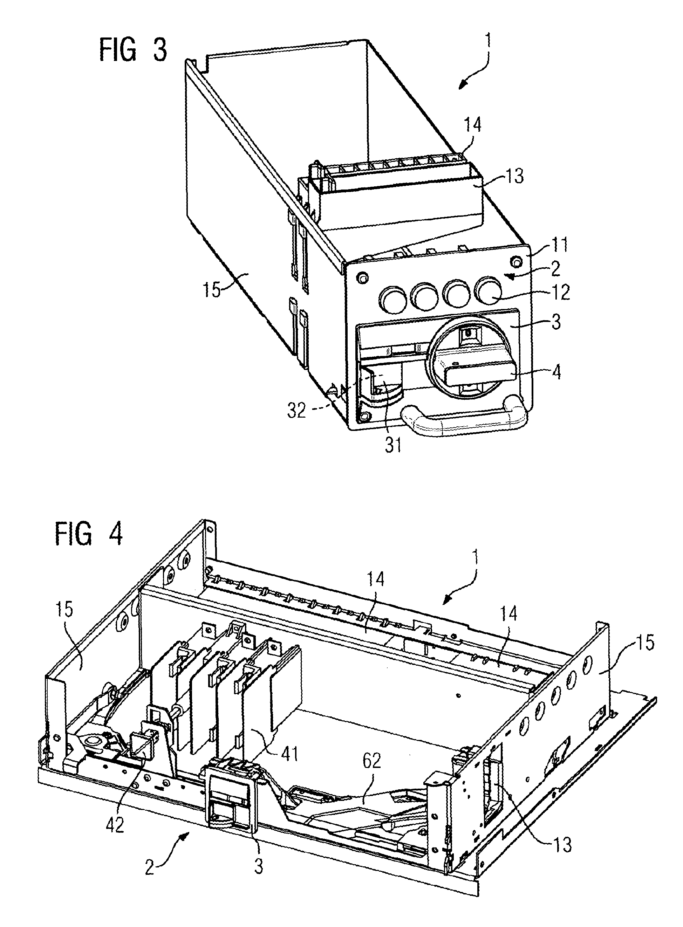

FIG 3 zeigt eine perspektivische Ansicht eines beispielhaften Kleineinschubs 1. An der Frontplatte 11 sind beispielhaft vier Leuchtmelder 12 zur Anzeige interner Schaltzustände des Geräteeinschubs 1 vorhanden. An der Oberseite in etwa der Mitte des Geräteeinschubs 1 sind ein Hauptstromstecker als Teil eines Hauptkontaktsystems 14 und ein Steuerstromstecker als Teil eines Steuerkontaktsystems 13 dargestellt. Sie sind mittels zweier in dieser Darstellung nicht erkennbarer Verfahrmechaniken vertikal verschiebbar, um entsprechende schaltschrankseitige Gegenstecker kontaktieren zu können. Die beiden Stecker 13, 14 sind in nutenförmigen Aussparungen in den Seitenwänden 15 des gezeigten Geräteeinschubs 1 geführt. Der Antrieb der beiden Kontaktsysteme 13, 14 erfolgt mittels eines am Rückteil der Frontbaugruppe 3 angeordneten und daher nicht sichtbaren koaxialen Antriebswellensystems.

FIG 4 zeigt eine perspektivische Ansicht eines beispielhaften Normaleinschubs 1. In dieser Darstellung sind zwei Verfahrmechaniken zum Verfahren der beiden Kontaktsysteme 13, 14 mittels der Frontbaugruppe 3 zu sehen. Wie die FIG 4 zeigt, kann der Steuerstecker 13 mittels einer Schubplatte 62 bzw. Schubstange quer zu Einschubrichtung verfahren werden. Der Steuerstecker 13 ragt dann in einer Teststellung durch eine in der Seitenwand ausgesparte Öffnung im rechten Teil der FIG 4 hindurch und kann somit ein nicht weiter dargestelltes schaltfeld- bzw. schaltschrankseitiges Gegenstück kontaktieren. Im rückwärtigen Teil des Geräteeinschubs 1 ist das Hauptkontaktsystem 14 angeordnet (nicht dargestellt), welches mittels der Frontbaugruppe 3 und weiter über Schubstangen und Zahnscheiben parallel zur Einschubrichtung verfahren werden kann. Mit dem Bezugszeichen 41 ist ein Hauptschalter bezeichnet, der über eine Hauptschalterkupplung 42 mit einer Handhabe an der Frontseite 2 des Geräteeinschubs 1 manuell betätigt werden kann. Die Handhabe selbst ist nicht dargestellt.

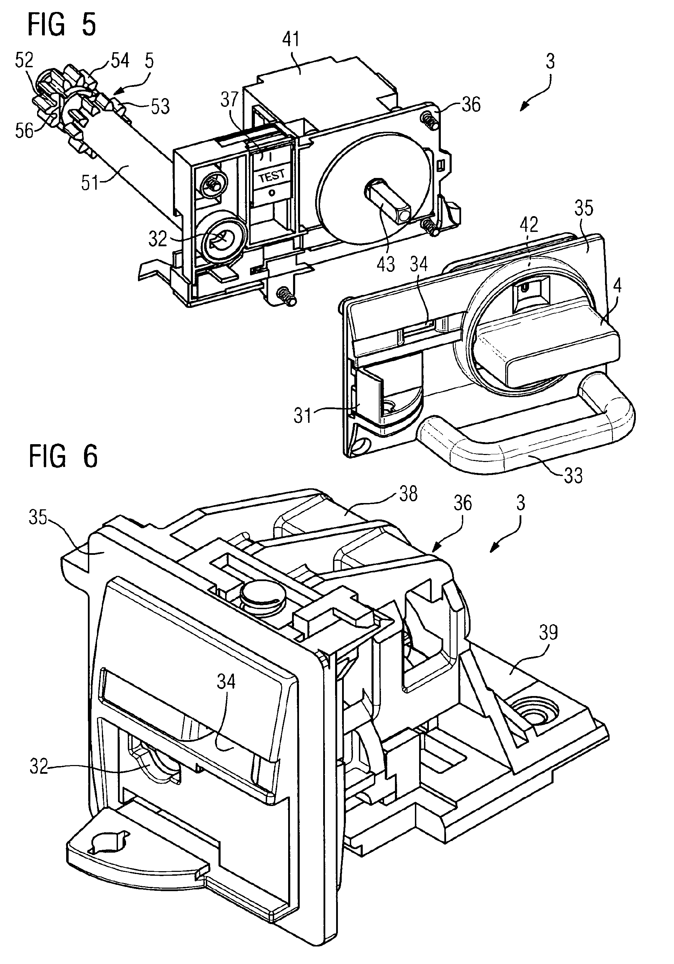

FIG 5 zeigt eine beispielhafte Frontbaugruppe 3 mit einem erfindungsgemäßen koaxialen Antriebswellensystem 1 vorzugsweise für einen Kleineinschub 1 in perspektivischer Ansicht. Mit dem Bezugszeichen 35 ist ein Frontteil der Frontbaugruppe 3, mit dem Bezugszeichen 36 ein Rückteil der Frontbaugruppe 3 bezeichnet. Das Fronteil 35 weist beispielhaft die Handhabe 4, den Handschieber 31, ein Sichtfenster 34 zur Anzeige der jeweiligen Schaltstellung mittels einer Anzeigeplatte 37, einen Handgriff 33 sowie eine mit der Handhabe 4 verbundene Hauptschalterkupplung 42 auf. Letztere kann mit einer Hauptschalterwelle 43 des am Rückteil 36 angebrachten Hauptschalters 41 kuppeln.

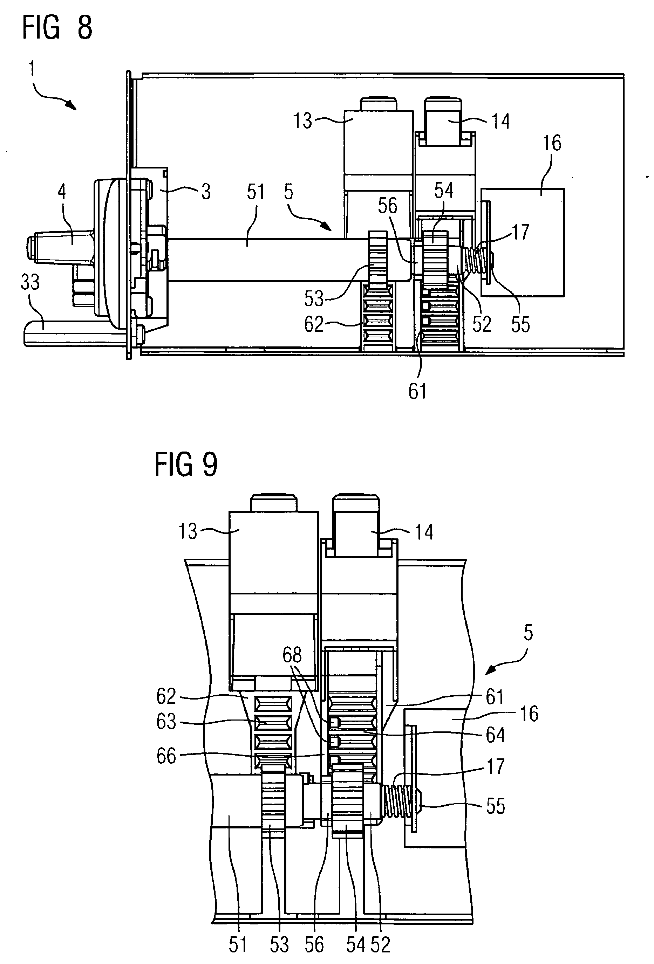

Im linken oberen Teil der FIG 5 ist eine äußere Antriebswelle 51 des erfindungsgemäßen koaxialen Antriebswellensystems 1 zum Verfahren des Steuerkontaktsystems 13 und eine innere Antriebswelle 52 zum Verfahren des Hauptkontaktsystems 14 des Geräteeinschubs 1 zu sehen. Die äußere Antriebswelle 51 weist eine erste Außenverzahnung 53 in Form eines Zahnrades zum schlupffreien Verfahren des Steuerkontaktsystems 13 auf. In entsprechender Weise weist auch die innere Antriebswelle 52 eine zur ersten Außenverzahnung 53 axial benachbarte zweite Außenverzahnung 54 in Form eines Zahnrades zum schlupffreien Verfahren des Hauptkontaktsystems 14 auf. Die innere und äußere Antriebswelle 52, 51 weisen jeweils eine nicht weiter bezeichnete Mitnehmeraussparung im Bereich der Zugangsöffnung 32 auf, welche mit einem jeweiligen Mitnehmer eines ersten oder zweiten Betätigungswerkzeuges korrespondiert. Die innere und äußere Antriebswelle 52, 51 sind mittels des ersten Betätigungswerkzeuges mit einem in beide Mitnehmeraussparungen der Antriebswellen 52, 51 eingreifenden ersten Mitnehmer gemeinsam betätigbar. Die äußere Antriebswelle 51 ist mittels des zweiten Betätigungswerkzeuges mit einem nur in die Mitnehmeraussparung der äußeren Antriebswelle 51 eingreifenden zweiten Mitnehmer betätigbar. Die Funktionsweise des erfindungsgemäßen koaxialen Antriebswellensystems 5 wird in den Figuren FIG 8 bis FIG 11 noch ausführlicher erläutert.

FIG 6 zeigt eine beispielhafte Frontbaugruppe 3 mit einem erfindungsgemäßen Antriebswellensystem 5 vorzugsweise für einen Normaleinschub 1 in perspektivischer Ansicht. Der Handschieber selbst ist nicht dargestellt. Im Vergleich zu FIG 5 fehlt hier die integrierte Hauptschalterfunktion.

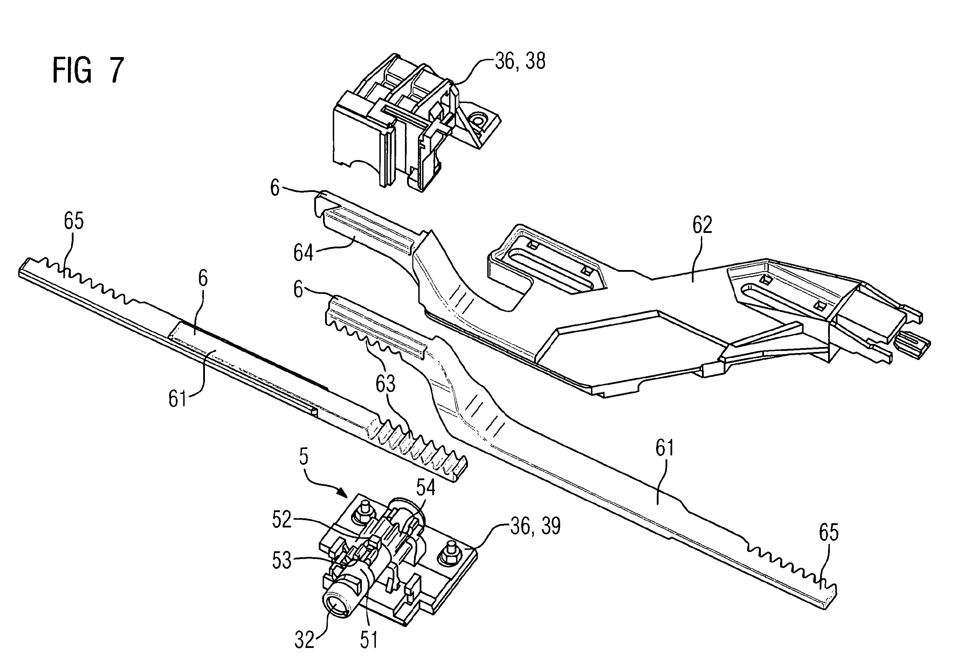

FIG 7 zeigt eine Explosionsdarstellung der Frontbaugruppe 3 gemäß FIG 6 mit einem erfindungsgemäßen koaxialen Antriebswellensystem 5 mit dargestellten anzutreibenden Schubstangen 61, 62. Die beiden Schubstangen 61 weisen eine antriebsseitige Verzahnung 63 zum Antreiben des Hauptkontaktsystems 14 auf. Mit dem Bezugszeichen 65 ist eine jeweilige abtriebsseitige Verzahnung bezeichnet, welche bei einem Normaleinschub 1 üblicherweise eine Zahnscheibe zum Umlenken der Schubbewegung der Schubstangen 61 in eine Schubbewegung des Hauptstromsteckers 14 parallel zur Einschubrichtung bewirkt. Die Verzahnung 63 ist mit der Verzahnung 54 der inneren Antriebswelle 52 im Eingriff. Die mit dem Bezugszeichen 62 bezeichnet Schubstange bzw. Schubplatte weist gleichfalls eine antriebsseitige Verzahnung 64 auf. Diese ist mit der Verzahnung 53 der äußeren Antriebswelle 51 im Eingriff. Ober- und Unterteil 38, 39 der Frontbaugruppe 3 weisen nicht weiter gezeigte Öffnungen auf, durch welche die Schubstangen 61, 62 teilweise hindurchgeführt sind.

FIG 8 zeigt einen beispielhaften im Schnitt dargestellten Kleineinschub 1 mit einem erfindungsgemäßen koaxialen Antriebswellensystem 5 mit eingefahrenen Schubstangen 61, 62.

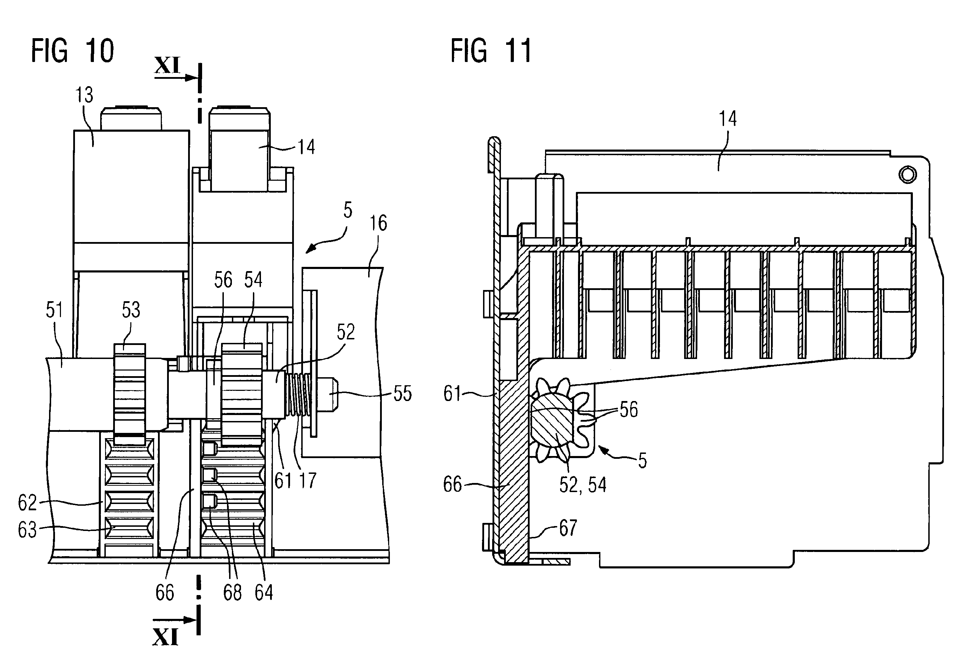

Erfindungsgemäß ist die innere Antriebswelle 52 gegenüber der äußeren Antriebswelle 51 gegen die Kraft einer Druckfeder 17 axial verschiebbar angeordnet. Die Druckfeder 17 ist beispielhaft eine zylinderförmige Druckfeder und auf einem Wellenende 55 der inneren Antriebswelle 52 aufgeschoben. Mit dem Bezugszeichen 16 ist ein Gegenlager für die Druckfeder 17 bezeichnet. Die innere Antriebswelle 52 ist mittels des ersten Betätigungswerkzeuges nur in einer Gedrücktstellung von der einen Drehendstellung in die jeweils andere Drehendstellung drehbar. Die innere Antriebswelle 52 ist dabei über eine Formschlussverbindung in ihrer jeweiligen Drehendstellung verrastbar. Zusätzlich oder alternativ kann die innere Antriebswelle 52 über eine durch die Druckfeder 17 bewirkte Kraftschlussverbindung in ihrer jeweiligen Drehendstellung drehfest fixierbar sein. Die jeweiligen Drehendstellungen der inneren und äußeren Antriebswelle 52, 51 weisen einen vorgegebenen Drehwinkel von 180° zueinander auf. Die vorzugsweise segmentförmigen Ausnehmungen 56 für die Herstellung des Formschlusses sind in den darauf folgenden Figuren FIG 9 bis FIG 11 und insbesondere in FIG 11 im Detail dargestellt.

FIG 9 zeigt eine Schnittdarstellung durch das Antriebswellensystem 5 der Frontbaugruppe 3 gemäß FIG 8 mit ausgefahrenen Schubstangen 61, 62 im Detail.

Die innere Antriebswelle 52 weist erfindungsgemäß zwei Ausnehmungen 56, vorzugsweise zwei sich gegenüberliegende segmentförmige Ausnehmungen 56, an einer gleichen axialen Position zwischen der ersten und zweiten Außenverzahnung 53, 54 auf. Die beiden Ausnehmungen 56 sind derart geometrisch auf ein Gegenstück 66 im Geräteeinschub 1 abgestimmt, dass die innere Antriebswelle 52 nur in den Drehendstellungen durch die Rückstellkraft der Druckfeder 17 in das Gegenstück 66 einrastbar ist. Im Beispiel der FIG 9 befindet sich die innere Antriebswelle 52 in einer Ruhestellung. Beide Antriebswelle 51, 52 sind ausgefahren, das heißt, dass sich der Geräteeinschub 1 in der Betriebs- oder Arbeitsstellung befindet. Zudem ist die zweite Außenverzahnung 54 der inneren Antriebswelle 52 mit einer antriebsseitigen Verzahnung 64 einer Schubstange 62 zum Verfahren des Hauptkontaktsystems 14 im Eingriff. Dabei ist ein seitlicher, entlang der Schubrichtung der Schubstange 61 verlaufender Steg das Gegenstück 66, in welches die Ausnehmungen 56 der inneren Antriebswelle 52 gemäß der Erfindung einrasten. Der seitliche Steg 66 verläuft parallel zur Schubrichtung, das heißt zur Längserstreckung der Schubstange 61, und erstreckt sich in Richtung aus der gezeigten Bildebene. Die Schubstange 61 weist zusammen mit dem seitlichen Steg 66 somit ein L-förmiges Profil bei einem Schnitt senkrecht zur Längserstreckung der Schubstange 61 auf.

Weiterhin ist die antriebsseitige Verzahnung 64 derart ausgebildet, dass eine Drehbewegung der inneren Antriebswelle 52 zwischen den jeweiligen Endstellungen nur in der Gedrücktstellung möglich ist. Dies wird dadurch erreicht, dass zwischen den jeweiligen beiden Endstellungen Blockierelemente 68 in die antriebsseitige Verzahnung 64 eingebracht sind bzw. dass in diesem axialen Bereich der Schubstange überhaupt keine Verzahnung 64 eingebracht ist.

FIG 10 zeigt eine Schnittdarstellung durch das Antriebswellensystem 5 der Frontbaugruppe 3 gemäß FIG 8 mit eingefahrenen Schubstangen 61 sowie die innere Antriebswelle 52 in einer Gedrücktstellung im Detail. Wie die FIG 10 zeigt, kann sich das nun freigefahrene Zahnrad 54 der inneren Antriebswelle 52 frei in der antriebsseitigen Verzahnung 64 der Schubstange 61 bewegen. Zugleich sind die beiden Ausnehmungen 56 in der Gedrücktstellung der inneren Antriebswelle 52 in axialer Richtung nach rechts freigefahren, so dass diese nicht mehr in formschlüssiger Verbindung mit dem Gegenstück 66, das heißt mit dem seitlichen Steg 66 der Schubstange 61, stehen. Die innere Antriebswelle 52 kann folglich zwischen beiden Drehendstellungen bewegt werden.

FIG 11 zeigt eine Schnittdarstellung durch das Antriebswellensystem 5 entlang der in FIG 10 eingetragenen Schnittlinie XI-XI und mit den erfindungsgemäßen Ausnehmungen 56 an der inneren Antriebswelle 52 im Detail. Wie die FIG 11 zeigt, liegt eine der Ausnehmungen 56 an einer Anlagefläche 67 des seitlichen Stegs 66 der Schubstange 61 plan an. Eine Verdrehung der inneren Antriebswelle 52 ist in dieser Drehendstellung in der nicht gedrückten Stellung nicht möglich.

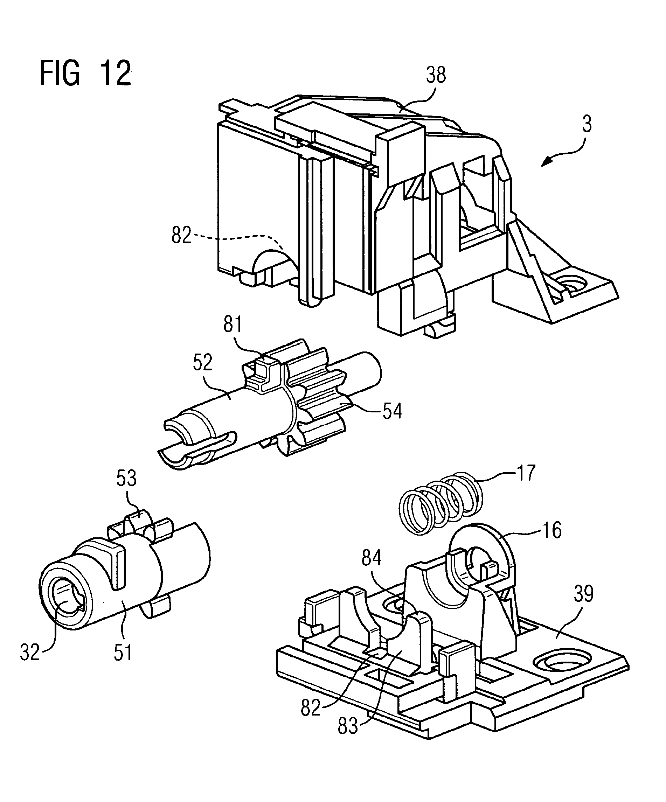

FIG 12 zeigt eine Explosionsdarstellung einer beispielhaften Frontbaugruppe 3 vorzugsweise für einen Normaleinschub 1 mit einer Rastnase 81 und Aussparungen 82 gemäß der Erfindung. Die innere Antriebswelle 52 weist im Beispiel der FIG 12 nur eine Rastnase 81 an einer radialen Außenseite der inneren Antriebswelle 52 auf. Die Rastnase 81 ist derart geometrisch auf Aussparungen 82 in einer Lagerplatte 83 im Geräteeinschub 1 abgestimmt, dass die innere Antriebswelle 52 nur in den Drehendstellungen durch die Rückstellkraft der Druckfeder 17 in die Aussparungen 82 einrastbar ist. Die beiden in FIG 12 gezeigten Aussparungen 82 sind in Bezug auf die Drehachse des Antriebswellensystems 5 zueinander versetzt angeordnet. Vorzugsweise sind die Aussparungen 82 bei einem vorgegebenen Drehwinkel von 180° zwischen den jeweiligen Drehendstellungen in Bezug auf diese Drehachse sich radial gegenüberliegend angeordnet. Im Beispiel der FIG 12 sind die Aussparungen 82 integrale Bestandteile des vorzugsweise aus Kunststoff mittels eines Spritzgussverfahrens hergestellten Gehäuses der Frontbaugruppe 3, bestehend aus dem Oberteil 38 und dem Unterteil 39.

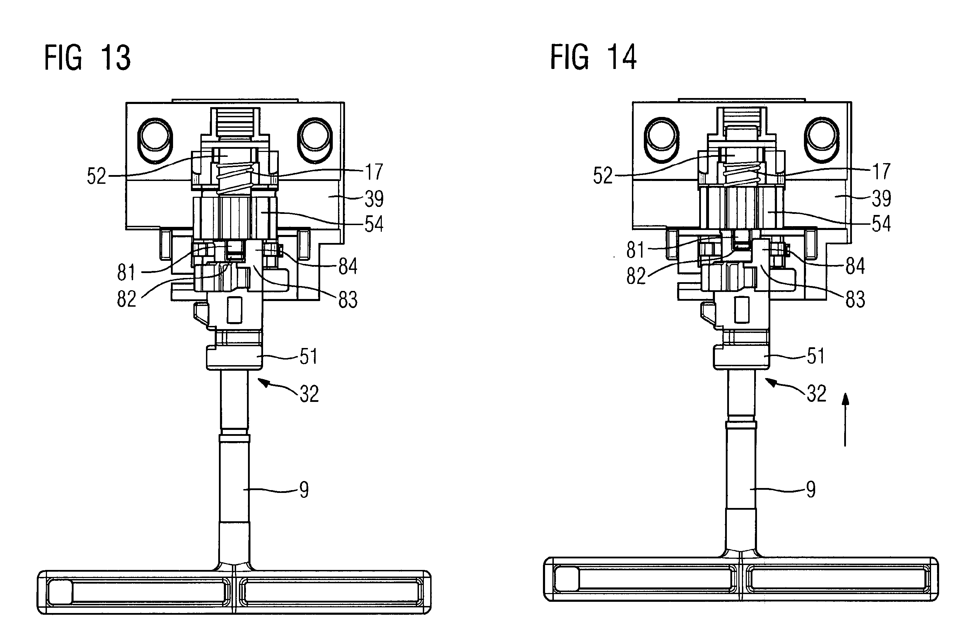

FIG 13 zeigt eine Ansicht auf das Unterteil 39 der Frontbaugruppe 3 gemäß FIG 12 mit dem Antriebswellensystem 5 in einer Ruhestellung der inneren Antriebswelle 52. In diesem Fall ist die gezeigte Rastnase 81 axial in der Aussparung 82 der Lagerschale 83 Frontbaugruppe 3 eingerastet. Am axialen Ende 84 der Lagerplatte 83 liegt das Zahnrad 54 der inneren Antriebswelle 52 an.

FIG 14 zeigt eine Ansicht auf das Unterteil gemäß FIG 13 in einer Gedrücktstellung der inneren Antriebswelle 52. In diesem Fall ist das gezeigte Betätigungswerkzeug 91 leicht nach innen geschoben, so dass die innere Antriebswelle 52 die Druckfeder 17 zusammendrückt. Die Rastnase 81 ist nun axial freigefahren, so dass eine Drehbewegung der inneren Antriebswelle 52 möglich ist.

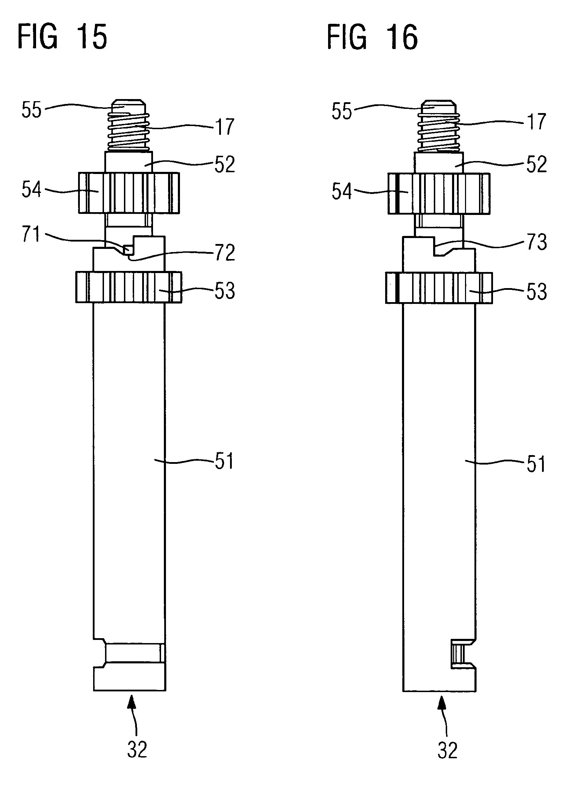

FIG 15 zeigt ein koaxiales Antriebswellensystem 5 vorzugsweise für einen Kleineinschub 1 mit einer inneren Antriebswelle 52 und einer mit dieser verrasteten äußeren Antriebswelle 51 gemäß der Erfindung.

Es ist im Beispiel der FIG 15 eine Mitnehmernase 71 an einer radialen Außenseite der inneren Antriebswelle 52 angeordnet. Die äußere Antriebswelle 51 weist etwa im gleichen axialen Bereich einen entlang der radialen Außenseite der äußeren Antriebswelle 51 teilweise tangential verlaufenden Ausschnitt mit einer axialen Rastvertiefung 72 auf. Die Mitnehmernase 71 fährt bei einer Drehbetätigung der inneren Antriebswelle 52 derart in den Ausschnitt 72 der äußeren Antriebswelle 51 ein, dass die äußere Antriebswelle 51 mit der inneren Antriebswelle 52 im Sinne eines Bajonettverschlusses in einer der Endstellungen verrastet. Dies ist im Beispiel der FIG 15 gezeigt. Dadurch ist neben einer Fixierung der inneren Antriebswelle 52 auch eine Fixierung der äußeren Antriebswelle 51 vorteilhaft möglich.

FIG 16 zeigt das koaxiale Antriebswellensystem gemäß FIG 15 im entrasteten Zustand der beiden Antriebswellen 51, 52 zum Vergleich.

Vorzugsweise weist die Frontbaugruppe 3 für einen Geräteeinschub 1 zum Einschieben in ein Einschubfach eines Schaltschrankes 100 zumindest teilweise ein derartiges erfindungsgemäßes koaxiales Antriebswellensystem 5 zum Einstellen zweier oder mehrerer Schaltstellungen des Geräteeinschubs 1 auf. Im Beispiel der FIG 6, FIG 7 und FIG 12 bis FIG 14 ist das erfindungsgemäße koaxiale Antriebswellensystem 5 komplett integriert. Die dortige Frontbaugruppe 3 ist besonders vorteilhaft für Kleineinschübe 1. Im Beispiel der FIG 5, FIG 8 bis FIG 11 sowie FIG 15 und FIG 16 ist das koaxiale Antriebswellensystem 5 nur zum Teil integriert. Insbesondere sind die Zahnräder 53, 54 der beiden Antriebswellen 51, 52 außerhalb der Frontbaugruppe 3 angeordnet.

Die Frontbaugruppe 3 eines Normaleinschubs 1 weist vorzugsweise einen Handschieber 31 zum Verschließen oder zum Freigeben der Zugangsöffnung 32 des Antriebwellensystems 5 auf. Der Handschieber 31 ist derart mit einem Drehbetätigungsmechanismus eines Hauptschalters des Geräteeinschubs 1 verbindbar, dass ein Einschalten des Hauptschalters bei geöffnetem Handschieber 31 und ein Öffnen des Handschiebers 31 bei eingeschaltetem Hauptschalter nicht möglich ist.

Dagegen weist die Frontbaugruppe 3 eines Kleineinschubs 1 einen Handschieber 31 zum Verschließen oder zum Freigeben der Zugangsöffnung 32 des Antriebwellensystems 5 sowie eine Handhabe 4 zur Betätigung eines Hauptschalters 41 auf. Der Handschieber 31 ist derart mit einem Drehbetätigungsmechanismus der Handhabe 4 des Hauptschalters 41 des Geräteeinschubs 1 verbunden, dass ein Einschalten des Hauptschalters 41 bei geöffnetem Handschieber 31 und ein Öffnen des Handschiebers 31 bei eingeschaltetem Hauptschalter 41 nicht möglich ist. Vorzugsweise ist dann der Hauptschalter 41 an dem Rückteil 36 der Frontbaugruppe 3 angebracht.

Erfindungsgemäß weist der Geräteeinschub 1, insbesondere zum Einschieben in ein Einschubfach eines Schaltschrankes 100, ein koaxiales Antriebswellensystem 5 zum Einstellen zweier oder mehrerer Schaltstellungen des Geräteeinschubs 1 auf.

Alternativ kann der Geräteeinschub 1 eine Frontplatte 11 mit einer Aussparung zur Aufnahme einer erfindungsgemäßen Frontbaugruppe 3 zum Einstellen zweier oder mehrerer Schaltstellungen des Geräteeinschubs 1 aufweisen.

Schließlich kann der Schaltschrank 100 gemäß der Erfindung eine Vielzahl von Einschubfächern aufweisen, in welchen derartige Geräteeinschübe 1 entfernbar aufgenommen sind.

FIG 17 zeigt beispielhaft ein erstes Betätigungswerkzeug 91 mit einem langen Mitnehmer 93 zum Antreiben der inneren und äußeren Antriebswelle 52, 51.

FGI 18 zeigt beispielhaft ein zweites Betätigungswerkzeug 92 mit einem kurzen Mitnehmer 94 zum Antreiben der äußeren Antriebswelle 51.

### Bezugszeichenliste

- 1: Geräteeinschub, Einschubkassette, Kleineinschub, Normaleinschub
- 2: Frontseite
- 3: Frontbaugruppe
- 4: Handhabe des Hauptschalters
- 5: koaxiales Antriebswellensystem
- 6: Verfahrmechanik
- 9: Schlüssel, Betätigungswerkzeug
- 11: Frontplatte
- 12: Leuchtmelder
- 13: Steuerstromkontaktsystem, Steuerkontakte, Steu- erstromstecker
- 14: Hauptstromkontaktsystem, Hauptkontakte, Haupt- stromstecker
- 15: Seitenwand
- 16: Gegenlager
- 17: Druckfeder, Federelement, Zylinderfeder
- 31: Handschieber
- 32: Zugangsöffnung
- 33: Handgriff
- 34: Sichtfenster
- 35: Frontteil
- 36: Rückteil
- 37: Anzeigeplatte
- 38: Oberteil
- 39: Unterteil
- 41: Hauptschalter
- 42: Hauptschalterkupplung
- 43: Hauptschalterwelle
- 51: äußere Antriebswelle
- 52: innere Antriebswelle
- 53, 54: Zahnräder
- 55: Wellenende
- 56: Ausnehmungen
- 61: Schubstange
- 62: Schubstange, Schubplatte für Steuerstecker
- 63, 64: antriebsseitige Verzahnung, Linearverzahnung
- 65: abtriebsseitige Verzahnung, Linearverzahnung
- 66: Gegenstück, seitlicher Steg
- 67: Anlagefläche
- 68: Blockierelemente
- 71: Mitnehmernase
- 72: Ausschnitt mit Rastvertiefung
- 73: Anschlagfläche
- 81: Rastnase
- 82: Aussparung
- 83: Lagerplatte
- 84: axiales Ende der Lagerplatte
- 91: erstes Betätigungswerkzeug
- 92: kurzer Mitnehmer, kurzer Bart
- 93: langer Mitnehmer, langer Bart
- 100: Schaltschrank

## Patentansprüche

1. Koaxiales Antriebswellensystem für einen Geräteeinschub (1) zum Einschieben in ein Einschubfach eines Schaltschrankes (100), wobei das Antriebswellensystem (5) aufweist
- eine äußere Antriebswelle (51) zum Verfahren eines Steuerkontaktsystems (13) und eine innere Antriebswelle (52) zum Verfahren eines Hauptkontaktsystems (14) des Geräteeinschubs (1) und
- eine Zugangsöffnung (32) zum Einstecken eines ersten oder zweiten Betätigungswerkzeuges (91, 92) zum Antreiben der dahinterliegenden Antriebswellen (51, 52) in ihre jeweiligen ersten oder zweiten Drehendstellungen,
**dadurch gekennzeichnet,**
- **dass** die innere Antriebswelle (52) gegenüber der äußeren Antriebswelle (51) gegen die Kraft einer Druckfeder (17) axial verschiebbar angeordnet ist und
- **dass** die innere Antriebswelle (52) mittels des ersten Betätigungswerkzeuges (91) nur in einer Gedrücktstellung von der einen Drehendstellung in die jeweils andere Drehendstellung drehbar ist.

2. Koaxiales Antriebswellensystem nach Anspruch 1,
**dadurch gekennzeichnet,**
**dass** die innere Antriebswelle (52) über eine Formschlussverbindung in ihrer jeweiligen Drehendstellung verrastbar ist.

3. Koaxiales Antriebswellensystem nach Anspruch 1 oder 2,
**dadurch gekennzeichnet,**
**dass** die innere Antriebswelle (52) über eine durch die Druckfeder (17) bewirkte Kraftschlussverbindung in ihrer jeweiligen Drehendstellung drehfest fixierbar ist.

4. Koaxiales Antriebswellensystem nach einem der vorangegangenen Ansprüche,
**dadurch gekennzeichnet,**
**dass** die jeweiligen Drehendstellungen der inneren und äußeren Antriebswelle (52, 51) einen vorgegebenen Drehwinkel, insbesondere einen Drehwinkel von 180°, zueinander aufweisen.

5. Koaxiales Antriebswellensystem nach einem der vorangegangenen Ansprüche,
**dadurch gekennzeichnet,**
- **dass** die äußere Antriebswelle (51) eine erste Außenverzahnung (53) zum Verfahren des Steuerkontaktsystems (13) aufweist und
- **dass** die innere Antriebswelle (52) eine zur ersten Außenverzahnung (53) axial benachbarte zweite Außenverzahnung (54) zum Verfahren des Hauptkontaktsystems (14) aufweist.

6. Koaxiales Antriebswellensystem nach Anspruch 5,
**dadurch gekennzeichnet,**
- **dass** die innere Antriebswelle (52) zwei Ausnehmungen (56), insbesondere zwei sich gegenüberliegende segmentförmige Ausnehmungen (56), an einer gleichen axialen Position zwischen der ersten und zweiten Außenverzahnung (53, 54) aufweist und
- **dass** die beiden Ausnehmungen (56) derart geometrisch auf ein Gegenstück (66) im Geräteeinschub (1) abgestimmt sind, dass die innere Antriebswelle (52) nur in den Drehendstellungen durch die Rückstellkraft der Druckfeder (17) in das Gegenstück (66) einrastbar ist.

7. Koaxiales Antriebswellensystem nach Anspruch 5 oder 6,
**dadurch gekennzeichnet,**
- **dass** die zweite Außenverzahnung (54) der inneren Antriebswelle (52) mit einer antriebsseitigen Verzahnung (64) einer Schubstange (61) zum Verfahren des Hauptkontaktsystems (14) im Eingriff ist und
- **dass** ein seitlicher, entlang einer Schubrichtung verlaufender Steg (66) der Schubstange (61) das Gegenstück (66) ist, in welches die Ausnehmungen (56) der inneren Antriebswelle (52) einrasten.

8. Koaxiales Antriebswellensystem nach einem der Ansprüche 5 bis 7,
**dadurch gekennzeichnet,**
- **dass** die zweite Außenverzahnung (54) der inneren Antriebswelle (52) mit einer antriebsseitigen Verzahnung (64) zumindest einer Schubstange (61) zum Verfahren des Hauptkontaktsystems (14) im Eingriff ist und
- **dass** die antriebsseitige Verzahnung (64) derart ausgebildet ist, dass eine Drehbewegung der inneren Antriebswelle (52) zwischen den jeweiligen Endstellungen nur in der Gedrücktstellung möglich ist.

9. Koaxiales Antriebswellensystem nach einem der Ansprüche 5 bis 8,
**dadurch gekennzeichnet,**
- **dass** die innere Antriebswelle (52) zumindest eine Rastnase (81) an einer radialen Außenseite und an einer gleichen axialen Position zwischen der ersten und zweiten Außenverzahnung (53, 54) aufweist und
- **dass** die zumindest eine Rastnase (81) derart geometrisch auf Aussparungen (82) in einer Lagerplatte (83) im Geräteeinschub (1) abgestimmt ist, dass die innere Antriebswelle (52) nur in den Drehendstellungen durch die Rückstellkraft der Druckfeder (17) in die Aussparungen (82) einrastbar ist.

10. Koaxiales Antriebswellensystem nach einem der vorangegangenen Ansprüche,
**dadurch gekennzeichnet,**
- **dass** zumindest eine Mitnehmernase (71) an einer radialen Außenseite der inneren Antriebswelle (52) angeordnet ist,
- **dass** die äußere Antriebswelle (51) etwa im gleichen axialen Bereich einen entlang der radialen Außenseite der äußeren Antriebswelle (51) teilweise tangential verlaufenden Ausschnitt (72) mit einer axialen Rastvertiefung aufweist und
- **dass** die Mitnehmernase (71) bei einer Drehbetätigung der inneren Antriebswelle (52) derart in den Ausschnitt (72) der äußeren Antriebswelle (51) einfährt, dass die äußere Antriebswelle (51) mit der inneren Antriebswelle (52) in einer der Endstellungen verrastet.

11. Frontbaugruppe für einen Geräteeinschub (1) zum Einschieben in ein Einschubfach eines Schaltschrankes (100),
**dadurch gekennzeichnet,**
**dass** die Frontbaugruppe zumindest teilweise ein koaxiales Antriebswellensystem (5) nach einem der vorangegangenen Ansprüche zum Einstellen zweier oder mehrerer Schaltstellungen des Geräteeinschubs (1) aufweist.

12. Geräteeinschub, insbesondere zum Einschieben in ein Einschubfach eines Schaltschrankes (100), mit einem koaxialen Antriebswellensystem (5) nach einem der Ansprüche 1 bis 10 zum Einstellen zweier oder mehrerer Schaltstellungen des Geräteeinschubs.

13. Geräteeinschub, insbesondere zum Einschieben in ein Einschubfach eines Schaltschrankes (100), mit einer Frontplatte (11) mit einer Aussparung zur Aufnahme einer Frontbaugruppe (3) nach Anspruch 11 zum Einstellen zweier oder mehrerer Schaltstellungen des Geräteeinschubs.

14. Schaltschrank mit einer Vielzahl von Einschubfächern, in welchen Geräteeinschübe (1) nach Anspruch 12 oder 13 entfernbar aufgenommen sind.

## Claims

1. Coaxial drive shaft system for a withdrawable unit (1) for insertion into a bay of a switchgear cabinet (100), with the drive shaft system (5) having
- an outer drive shaft (51) for moving a control contact system (13) and an inner drive shaft (52) for moving a main contact system (14) of the withdrawable unit (1), and
- an access opening (32) for inserting a first or second operating tool (91, 92) for driving the drive shafts (51, 52) situated behind it to their respective first or second rotary end positions,
**characterized**
- **in that** the inner drive shaft (52) is arranged such that it can be axially displaced in relation the outer drive shaft (51) against the force of a compression spring (17), and
- **in that** the inner drive shaft (52) can be rotated from one rotary end position to the respective other rotary end position by means of the first operating tool (91) only in a depressed position.

2. Coaxial drive shaft system according to Claim 1,
**characterized**
**in that** the inner drive shaft (52) can be latched in its respective rotary end position by means of an interlocking connection.

3. Coaxial drive shaft system according to Claim 1 or 2,
**characterized**
**in that** the inner drive shaft (52) can be fixed in its respective rotary end position, such that it cannot rotate, by means of a force-fitting connection which is produced by the compression spring (17).

4. Coaxial drive shaft system according to one of the preceding claims,
**characterized**
**in that** the respective rotary end positions of the inner and outer drive shafts (52, 51) have a predefined rotary angle in relation to one another, in particular a rotary angle of 180°.

5. Coaxial drive shaft system according to one of the preceding claims,
**characterized**
- **in that** the outer drive shaft (51) has a first external tooth system (53) for moving the control contact system (13), and
- **in that** the inner drive shaft (52) has a second external tooth system (54) for moving the main contact system (14), said second external tooth system being axially adjacent to the first external tooth system (53).

6. Coaxial drive shaft system according to Claim 5,
**characterized**
- **in that** the inner drive shaft (52) has two recesses (56), in particular two segment-like recesses (56), which are situated opposite one another, in an identical axial position between the first and second external tooth system (53, 54), and
- **in that** the two recesses (56) are geometrically matched to a mating piece (66) in the withdrawable unit (1) in such a way that the inner drive shaft (52) can be latched into the mating piece (66) by the restoring force of the compression spring (17) only in the rotary end positions.

7. Coaxial drive shaft system according to Claim 5 or 6,
**characterized**
- **in that** the second external tooth system (54) of the inner drive shaft (52) engages with a drive-side tooth system (64) of a push rod (61) for moving the main contact system (14), and
- **in that** a lateral crosspiece (66) of the push rod (61), which crosspiece runs along a pushing direction, is the mating piece (66) into which the recesses (56) in the inner drive shaft (52) latch.

8. Coaxial drive shaft system according to one of Claims 5 to 7,
**characterized**
- **in that** the second external tooth system (54) of the inner drive shaft (52) engages with a drive-side tooth system (64) of at least one push rod (61) for moving the main contact system (14), and
- **in that** the drive-side tooth system (64) is formed in such a way that a rotary movement of the inner drive shaft (52) between the respective end positions is possible only in the depressed position.

9. Coaxial drive shaft system according to one of Claims 5 to 8,
**characterized**
- **in that** the inner drive shaft (52) has at least one latching lug (81) on a radial outer face and in an identical axial position between the first and second external tooth system (53, 54), and
- **in that** the at least one latching lug (81) is geometrically matched to cutouts (82) in a bearing plate (83) in the withdrawable unit (1) in such a way that the inner drive shaft (52) can latch into the cutouts (82) by virtue of the restoring force of the compression spring (17) only in the rotary end positions.

10. Coaxial drive shaft system according to one of the preceding claims,
**characterized**
- **in that** at least one driver lug (71) is arranged on a radial outer face of the inner drive shaft (52),
- **in that** the outer drive shaft (51) has, approximately in the same axial region, a clearance (72) which runs partially tangentially along the radial outer face of the outer drive shaft (51) and has an axial latching depression, and
- **in that**, when the inner drive shaft (52) is operated in a rotary manner, the driver lug (71) moves into the clearance (72) in the outer drive shaft (51) in such a way that the outer drive shaft (51) latches with the inner drive shaft (52) in one of the end positions.

11. Front assembly for a withdrawable unit (1) for insertion into a bay of a switchgear cabinet (100),
**characterized**
**in that** the front assembly at least partially has a coaxial drive shaft system (5) according to one of the preceding claims for setting two or more switching positions of the withdrawable unit (1).

12. Withdrawable unit, in particular for insertion into a bay of a switchgear cabinet (100), having a coaxial drive shaft system (5) according to one of Claims 1 to 10 for setting two or more switching positions of the withdrawable unit.

13. Withdrawable unit, in particular for insertion into a bay of a switchgear cabinet (100), having a front plate (11) with a cutout for accommodating a front assembly (3) according to Claim 11 for setting two or more switching positions of the withdrawable unit.

14. Switchgear cabinet having a large number of bays in which withdrawable units (1) according to Claim 12 or 13 are accommodated such that they can be removed.

## Revendications

1. Système d'arbre d'entraînement coaxial, pour un tiroir ( 1 ) d'appareil à insérer dans un casier d'insertion d'une armoire ( 100 ) de commande, le système ( 5 ) d'arbre d'entraînement comportant
- un arbre ( 51 ) extérieur d'entraînement, pour le déplacement d'un système ( 13 ) de contact de commande et un arbre ( 52 ) intérieur d'entraînement, pour le déplacement d'un système ( 14 ) principal de contact du tiroir ( 1 ) d'appareil, et
- une ouverture ( 32 ) d'accès, pour l'enfichage d'un premier ou d'un deuxième outil ( 91, 92 ) d'actionnement, pour l'entraînement des arbres ( 51, 52 ) d'entraînement se trouvant derrière, dans leur première ou deuxième position d'extrémité en rotation respective,
**caractérisé**
- **en ce que** l'arbre ( 52 ) intérieur d'entraînement est monté coulissant axialement, à l'encontre de la force d'un ressort ( 7 ) de compression, par rapport à l'arbre ( 51 ) extérieur d'entraînement, et
**caractérisé**
- **en ce que** l'arbre ( 52 ) intérieur d'entraînement est monté, au moyen du premier outil ( 91 ) d'actionnement, tournant de la une position d'extrémité en rotation à la respectivement autre position d'extrémité en rotation, seulement dans une position comprimée.

2. Système d'arbre d'entraînement coaxial suivant la revendication 1,
**caractérisé**
**en ce que** l'arbre ( 52 ) intérieur d'entraînement peut être encliqueté dans sa position d'extrémité en rotation respective par une liaison par complémentarité de forme.

3. Système d'arbre d'entraînement coaxial suivant la revendication 1 ou 2,
**caractérisé**
**en ce que** l'arbre ( 52 ) intérieur d'entraînement peut être immobilisé en rotation dans sa position d'extrémité en rotation respective par la liaison par coopération de force provoquée par le ressort ( 17 ) de compression.

4. Système d'arbre d'entraînement coaxial suivant l'une des revendications précédentes,
**caractérisé en ce que** les positions d'extrémité en rotation respectives des arbres ( 52, 51 ) intérieur et extérieur d'entraînement font entre elles un angle de rotation prescrit, notamment un angle de rotation de 180°.

5. Système d'arbre d'entraînement coaxial suivant l'une des revendications précédentes,
**caractérisé**
- **en ce que** l'arbre ( 51) extérieur d'entraînement a une première denture ( 53) extérieure, pour déplacer le système ( 13 ) de contact de commande, et
- **en ce que** l'arbre ( 52 ) intérieur d'entraînement a une deuxième denture ( 54) extérieure, voisine axialement de la première denture ( 53) extérieure, pour déplacer le système ( 14 ) de contact principal.

6. Système d'arbre d'entraînement coaxial suivant la revendication 5,
**caractérisé**
- **en ce que** l'arbre ( 52) intérieur d'entraînement a deux évidements ( 56 ), notamment deux évidements ( 56 ) opposés en forme de segment, en une même position axiale entre la première et la deuxième denture ( 53, 54) extérieure, et
- **en ce que** les deux évidements ( 56 ) sont adaptés géométriquement à une pièce ( 66 ) antagoniste dans le tiroir ( 1 ) d'appareil, de manière à pouvoir, par la force de rappel du ressort ( 17 ) de compression, encliqueter l'arbre ( 52 ) intérieur d'entraînement dans la pièce ( 66 ) antagoniste, seulement dans les positions d'extrémité en rotation.

7. Système d'arbre d'entraînement coaxial suivant la revendication 5 ou 6,
**caractérisé**
- **en ce que** la deuxième denture ( 54 ) extérieure de l'arbre ( 52) intérieur d'entraînement engrène avec une denture ( 64 ) du côté entraînement d'une barre ( 61 ) de coulissement, pour déplacer le système ( 14 ) principal de contact, et
- **en ce qu'**une barrette ( 66) de la barre ( 61) de coulissement est la pièce ( 66) antagoniste, dans laquelle s'encliquette les évidements ( 56) de l'arbre intérieur d'entraînement.

8. Système d'arbre d'entraînement coaxial suivant l'une des revendications 5 à 7,
**caractérisé**
- **en ce que** la deuxième denture ( 54 ) extérieure de l'arbre ( 52) intérieur d'entraînement engrène avec une denture ( 64) du côté entraînement, d'au moins une barre ( 61 ) de contact, et
- **en ce que** la denture ( 64) côté entraînement est telle qu'un mouvement de rotation de l'arbre ( 52) intérieur d'entraînement est possible entre les positions d'extrémité respectives, seulement dans la position comprimée.

9. Système d'arbre d'entraînement coaxial suivant l'une des revendications 5 à 8,
**caractérisé**
- **en ce que** l'arbre ( 52 ) d'entraînement a au moins un bec ( 81 ) d'encliquetage sur un côté extérieur radial et en une même position axiale entre la première et la deuxième denture ( 53, 54 ) extérieure, et
- **en ce que** le au moins un bec ( 81) d'encliquetage est adapté géométriquement à des évidements ( 82 ) dans une plaque ( 83 ) de support du tiroir ( 1 ) d'appareil, de manière à pouvoir encliqueter l'arbre ( 52) intérieur d'entraînement dans les évidements ( 82 ) par la force de rappel du ressort ( 17 ) de compression, seulement dans les positions d'extrémité en rotation.

10. Système d'arbre d'entraînement coaxial suivant l'une des revendications précédentes,
**caractérisé**
- **en ce qu'**au moins un bec ( 71 ) d'entraînement est disposé sur un côté extérieur radial de l'arbre ( 52) intérieur d'entraînement,
- **en ce que** l'arbre ( 51 ) extérieur d'entraînement a, à peu près dans la même zone axiale, un segment ( 72 ) s'étendant en partie tangentiellement le long du côté extérieur radial de l'arbre ( 51 ) extérieur d'entraînement et ayant une cavité axiale d'encliquetage, et
- en ce que le bec (71) d'entraînement pénètre, lors d'un actionnement en rotation de l'arbre ( 52 ) intérieur d'entraînement, dans le segment ( 72) de l'arbre ( 51 ) extérieur d'entraînement, de manière à encliqueter, dans l'une des positions d'extrémité, l'arbre ( 51 ) extérieur d'entraînement avec l'arbre ( 52 ) intérieur d'entraînement.

11. Module frontal pour un tiroir ( 1 ) d'appareil à insérer dans un casier de tiroirs d'une armoire ( 100 ) de commande, **caractérisé**
**en ce que** le module frontal comporte au moins en partie un système ( 5 ) coaxial d'arbre d'entraînement suivant l'une des revendications précédentes, pour régler deux ou plusieurs positions de commutation du tiroir ( 1 ) d'appareil.

12. Tiroir d'appareil, notamment destiné à être inséré dans un casier de tiroir d'une armoire ( 100 ) de commande, comprenant un système ( 5 ) coaxial d'arbre d'entraînement suivant l'une des revendications 1 à 10, pour régler deux ou plusieurs positions de commutation du tiroir ( 1 ) d'appareil.

13. Tiroir d'appareil destiné, notamment à être inséré dans un casier de tiroir d'une armoire ( 100 ) de commande, comprenant une plaque ( 11) frontale ayant un évidement de réception d'un module ( 3) frontal suivant la revendication 11, pour régler deux ou plusieurs positions de commutation du tiroir d'appareil.

14. Armoire de commande ayant une pluralité de casiers de tiroirs, dans lesquels sont logés, avec possibilité de les retirer, des tiroirs ( 1 ) d'appareil suivant la revendication 12 ou 13.
